# FASCICULE DE BREVET EUROPEEN

(11) **EP 0 777 034 B1**
(45) Date de publication et mention de la délivrance du brevet: **31.10.2001**
(21) Numéro de dépôt: 96402583.7
(22) Date de dépôt: 28.11.1996
(51) Int. Cl.: E21B 43/01, E21B 36/00

(54) **Raidisseur pour une canalisation flexible à usage en milieu marin**
Versteifungselement für eine flexible Rohrleitung zur meerestechnischen Anwendung
Stiffening element for a flexible pipeline in a marine environment

(30) Priorité: 29.11.1995 FR 9514114
(43) Date de publication de la demande: 04.06.1997
(73) Titulaire: COFLEXIP, 75116 Paris (FR)
(72) Inventeur: Secher, Philippe, 76250 Deville-les-Rouen (FR)
(74) Mandataire: Levy, David

(56) Documents cités:
- EP-A- 0 296 056
- WO-A-92/12376
- WO-A-94/09245
- SOVIET INVENTIONS ILLUSTRATED Section Ch, Week 9326 18 Août 1993 Derwent Publications Ltd., London, GB; Class H01, AN 93-212393 XP002009439 & SU-A-1 745 897 (UKHTA IND INST)

## Description

La présente invention concerne un raidisseur pour une canalisation flexible à usage en milieu marin, et plus particulièrement un raidisseur destiné à équiper une canalisation parcourue par un fluide chaud à une température supérieure à 80°C, par exemple une canalisation de remontée d'hydrocarbures depuis une tête de puits sous-marine vers une plate-forme d'exploitation pétrolière flottante.

Les canalisations flexibles visées plus haut et telles que fabriquées en grandes longueurs par la Société déposante comprennent une conduite flexible constituée d'une ou plusieurs couches généralement métalliques de résistance à l'écrasement, d'une ou plusieurs couches en polymère servant à étancher et présentant des propriétés d'isolation thermique, de fils d'armure généralement métalliques enroulés en hélice sous forme de nappes croisées assurant la résistance à la traction, et d'une couche de protection extérieure en polymère.

De telles canalisations peuvent être endommagées si la conduite flexible fléchit selon un rayon de courbure trop faible.

Il est connu, par WO 92 12376 et WO 94 09245, pour pallier ce risque de munir la canalisation d'un raidisseur présentant un corps élastique venu de moulage en polyuréthane, destiné à imposer un rayon de courbure minimum à la portion de conduite flexible susceptible de subir la flexion risquant de l'endommager.

Cette portion correspond par exemple à l'extrémité de liaison de la conduite flexible avec un embout d'extrémité de la canalisation assurant le raccordement entre ladite canalisation et ladite plate-forme d'exploitation pétrolière flottante.

La durée courante d'utilisation des canalisations décrites plus haut est d'une quinzaine à une vingtaine d'années, pendant lesquelles le raidisseur doit garder sa raideur afin de remplir sa fonction.

On a cependant constaté un vieillissement du polyuréthane par hydrolyse au contact de l'eau de mer, entraînant une perte de raideur du raidisseur préjudiciable.

On a proposé de remédier à cet inconvénient en augmentant l'épaisseur du raidisseur pour le rendre plus résistant. Toutefois cette augmentation de l'épaisseur du raidisseur (qui présente déjà un poids élevé) se traduit par un coût plus important et pose des problèmes de faisabilité du moulage notamment, étant donné l'impossibilité de mouler des pièces en polyuréthane d'une masse supérieure à 2 tonnes.

On a proposé une autre solution consistant à utiliser un polymère de composition différente et qui soit plus résistant à l'hydrolyse. Toutefois cette solution impose soit de modifier la composition du polyuréthane soit de recourir à des matières plastiques moins répandues que le polyuréthane et donc plus coûteuses. En outre, la modification de la composition du polyuréthane ou le choix d'une matière plastique de remplacement ne doivent pas entraîner une dégradation des performances mécaniques du raidisseur.

On a encore proposé de réduire la surface du raidisseur exposée à l'eau de mer au moyen de joints d'étanchéité disposés aux extrémités axiales du raidisseur, de manière à empêcher l'eau de mer de gagner l'interface entre le raidisseur et la conduite flexible.

Cette solution n'est toutefois pas très fiable dans la pratique, dans la mesure où le raidisseur est soumis à des déformations élastiques importantes et répétées dûes à la houle, qui peuvent déformer localement le joint ou son siège et permettre une rentrée d'eau ou d'humidité.

Le présente invention a pour objet de proposer un nouveau raidisseur dont les performances sont améliorées en terme de durée de vie en milieu marin, sans toutefois que cette amélioration ne se traduise par une augmentation notable du poids ou du coût de fabrication du raidisseur ni par une dégradation notable de ses performances mécaniques.

L'invention y parvient par le fait que le raidisseur comporte des moyens sur la conduite flexible pour dissiper la chaleur à l'interface entre le corps élastique du raidisseur et la conduite flexible.

Le terme "interface" doit s'entendre avec un sens large comme désignant la région annulaire comprise entre la conduite flexible et le corps élastique du raidisseur.

Les inventeurs ont constaté qu'en limitant la température du raidisseur à l'interface avec la conduite flexible on diminuait considérablement la vitesse d'hydrolyse du polyuréthane et par conséquent on ralentissait son vieillissement.

La température à l'interface est en effet, en l'absence de moyens pour limiter l'échauffement, relativement élevée du fait de la longueur du raidisseur et de la température du fluide circulant dans la conduite flexible, malgré la conduction thermique longitudinale des fils d'armure métalliques de la conduite flexible, car ces derniers ne suffisent pas à dissiper par conduction la chaleur à l'interface entre la conduite flexible et le raidisseur. Il est donc possible, grâce à l'invention, de réduire de façon significative la température à l'interface et de retarder le vieillissement du raidisseur de cette façon.

Dans une réalisation préférée de l'invention, lesdits moyens pour dissiper la chaleur comportent au moins un canal de circulation d'eau au sein du raidisseur.

Le canal de circulation d'eau peut conserver sensiblement toute son efficacité au cours du temps malgré l'immersion en milieu marin et les risques d'obturation du canal sous l'effet des accrétions d'animaux marins ou de l'accumulation de matière organique.

Une tentative d'explication réside dans le fait qu'en cas de début d'obturation du canal de circulation d'eau au sein du raidisseur, la température de l'eau dans ce canal augmente jusqu'à dépasser 40° C, température maximum supportable par les animaux marins, qui sont ainsi éliminés du canal. Si malgré tout la section du canal offerte à l'écoulement diminuait, la température de l'eau augmenterait et, par le phénomène de thermo-siphon, l'écoulement dans le canal s'accélérerait en limitant de ce fait l'échauffement.

Dans une réalisation particulière de l'invention, le raidisseur est parcouru par une pluralité de canaux de circulation d'eau dont la distance à la surface interne du raidisseur en regard de la conduite flexible est inférieure ou égale au diamètre desdits canaux.

Avantageusement, l'espacement entre les canaux de circulation d'eau est inférieur ou égal à deux fois leur diamètre et de préférence égal à leur diamètre.

Avantageusement, chaque canal de circulation d'eau débouche sur la surface interne du raidisseur en regard de ladite conduite flexible.

Dans une réalisation particulière de l'invention, un jeu annulaire d'épaisseur comprise entre 2 et 16 mm est présent à l'interface entre le raidisseur et la conduite flexible.

Dans une réalisation particulière de l'invention, lesdits moyens pour dissiper la chaleur à l'interface entre le raidisseur et la conduite flexible comportent au moins un insert métallique apte à conduire la chaleur depuis une région radialement interne du raidisseur vers l'extérieur. Avantageusement, ledit insert comporte une ailette externe permettant de dissiper par convection et/ou par rayonnement l'énergie thermique.

Dans une réalisation particulière de l'invention, lesdits moyens pour dissiper la chaleur comportent une pièce intermédiaire disposée entre le corps élastique du raidisseur et ladite conduite flexible.

Dans une réalisation particulière de l'invention, lesdits moyens pour dissiper la chaleur à l'interface entre le raidisseur et la conduite flexible comportent des moyens pour établir une circulation forcée d'un fluide de refroidissement entre un élément de dissipation d'énergie à l'extérieur du raidisseur et un élément de captation d'énergie à l'interface avec la conduite flexible.

L'invention trouve une application avantageuse lorsque la température du fluide chaud dans ladite conduite flexible est comprise entre 80 et 200° C et que la longueur du raidisseur est supérieure ou égale à 1,5 m, et plus particulièrement lorsqu'elle est comprise entre 2 et 3 m..

L'invention a encore pour objet une canalisation flexible équipée d'un raidisseur tel que précité.

D'autres caractéristiques et avantages de la présente invention apparaîtront à la lecture de la description détaillée qui va suivre, d'exemples de réalisation non limitatifs de l'invention, et à l'examen du dessin annexé sur lequel :
- la figure 1 est une vue schématique, en coupe axiale, d'une canalisation flexible équipée d'un raidisseur conforme à l'état de la technique,
- la figure 2 est une vue schématique, en coupe axiale, d'un raidisseur conforme à un premier exemple de réalisation de l'invention,
- la figure 3 est une section transversale, partielle, suivant le trait de coupe III/III de la figure 2,
- la figure 4 est une vue schématique, en coupe axiale, d'un raidisseur conforme à un deuxième exemple de réalisation de l'invention,
- la figure 5 est une vue schématique, en coupe axiale, d'un raidisseur conforme à un troisième exemple de réalisation de l'invention,
- la figure 6 est une vue schématique, en coupe axiale, d'un raidisseur conforme à un quatrième exemple de réalisation de l'invention,
- la figure 7 est une vue schématique, en coupe axiale, d'un raidisseur conforme à un cinquième exemple de réalisation de l'invention,
- la figure 8 est une vue schématique, en coupe axiale, d'un raidisseur conforme à un sixième exemple de réalisation de l'invention,
- la figure 9 est une section transversale, partielle, selon le trait de coupe IX/IX de la figure 8,
- la figure 10 est une vue schématique, en coupe axiale, d'un raidisseur conforme à un septième exemple de réalisation de l'invention,
- la figure 11 est une section transversale, schématique, selon le trait de coupe XI/XI de la figure 10,
- la figure 12 est une vue schématique, en coupe axiale, d'un raidisseur conforme à un huitième exemple de réalisation de l'invention,
- les figures 13, 14 et 15 sont des sections transversales respectives, partielles et schématiques, selon les traits de coupe XIII/XIII, XIV/XIV et XV/XV de la figure 12, et
- la figure 16 est une vue schématique, en coupe axiale, d'un raidisseur conforme à un neuvième exemple de réalisation de l'invention.

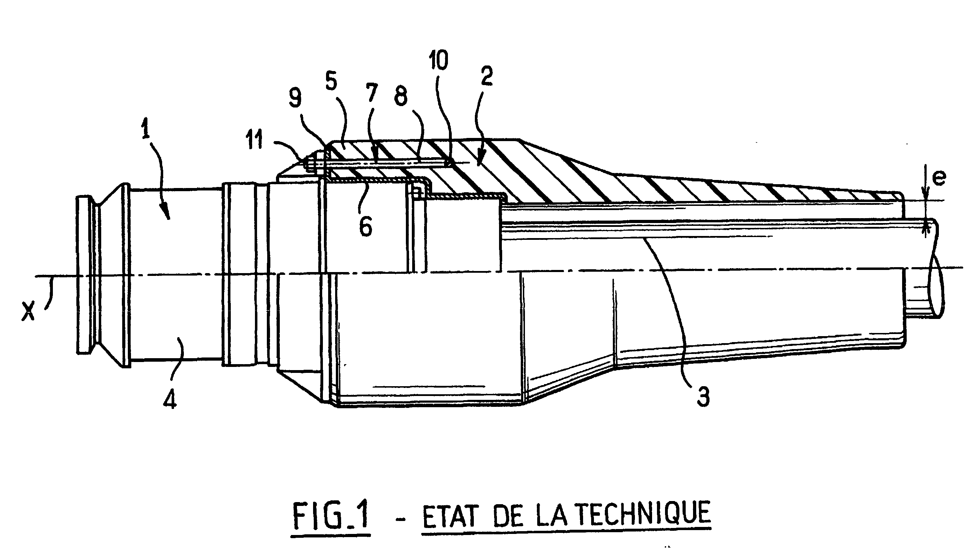

On a représenté sur la figure 1 une canalisation 1 équipée d'un raidisseur 2 connu en lui-même et décrit par exemple dans la publication internationale WO 92/12376 au nom de la Demanderesse.

La canalisation 1 comporte une conduite flexible 3 reliée à un embout rigide 4 de connection. Le raidisseur 2 impose un rayon de courbure minimum à la conduite flexible 3 et évite sa détérioration par flexion. La longueur du raidisseur 2 est déterminée par la longueur de la portion de conduite dont la courbure doit être limitée. Dans la pratique, la longueur du raidisseur 2 peut atteindre 3 m.

Dans l'exemple décrit, le raidisseur 2 comporte un corps élastique 5 venu de moulage en polyuréthane, de dureté Shore A comprise entre 60 et 95, et sur une portion de sa surface interne un insert métallique 6 reprenant la forme externe de l'embout 4. L'insert 6 est solidaire d'une armature 7 ancrée dans le corps élastique 5 du raidisseur 2. Cette armature 7 est constituée dans l'exemple décrit par une pluralité de tirants 8 reliant une extrémité 9 de l'insert 6 servant de bride et un jonc 10. Les tirants 8 s'étendent parallèlement à l'axe longitudinal X de l'embout 4 et présentent une extrémité filetée 11 formant saillie en avant de la bride 9 pour la solidarisation par boulonnage du raidisseur 2 à une bride formée sur l'embout 4.

L'armature 7 permet d'augmenter la rigidité en flexion du corps élastique 5 et assure une partie importante de la résistance aux efforts axiaux de traction et de compression qui affectent le raidisseur lorsque la conduite 3 est mis en flexion.

A titre indicatif, le corps élastique 5 présente une élongation comprise entre 10 et 15% pour la charge maximale imposée et pourrait subir, sans rupture, un allongement de 400%.

Le corps élastique 5 est réalisé par moulage en polyuréthane, étant surmoulé sur l'insert 6 (ce qui permet d'obtenir un frettage du corps élastique 5 sur l'embout 6 grâce au retrait du polyuréthane lors de la polymérisation). Le raidisseur est mis en place sur la canalisation en le faisant coulisser sur la conduite flexible 3. Le corps élastique 5 du raidisseur ménage à cet effet un jeu annulaire d'épaisseur e avec la conduite flexible 3.

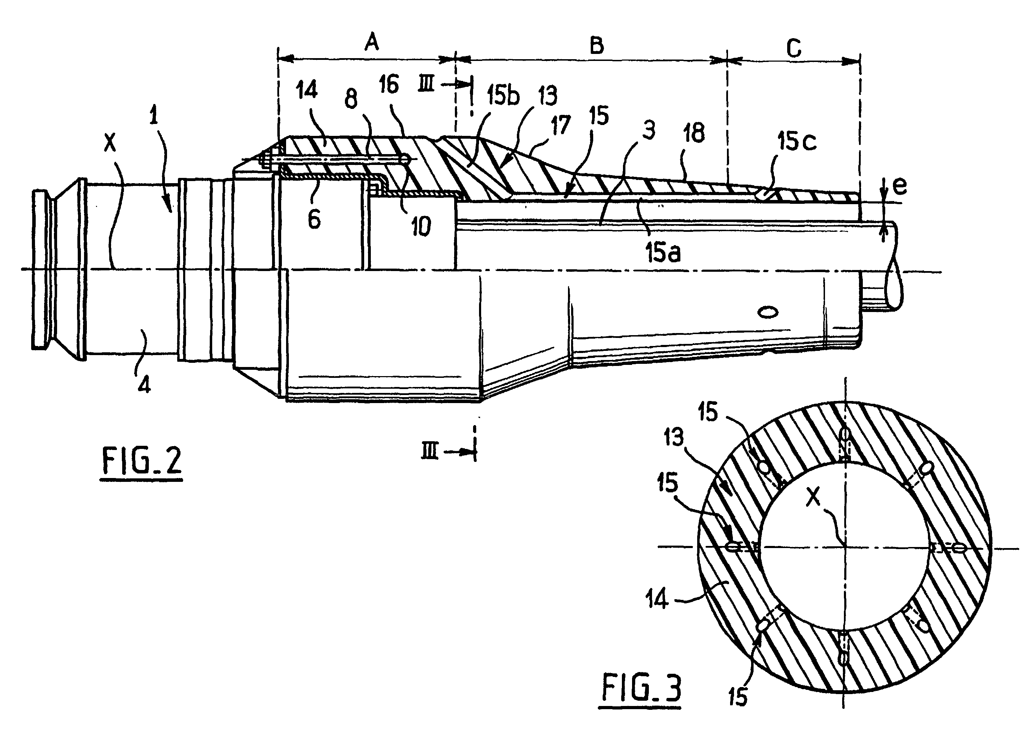

On a représenté sur les figures 2 et 3 un raidisseur 13 conforme à un premier exemple de réalisation de l'invention. Ce raidisseur 13 présente un corps élastique 14 venu de moulage en polyuréthane, parcouru par une pluralité de canaux de circulation d'eau 15. Les canaux 15 sont réalisés dans l'exemple décrit lors du moulage du corps élastique 14 au moyen de noyaux démoulables. En variante, on pourrait utiliser des noyaux fusibles ou tout autre moyen connu en soi.

Le raidisseur 13 peut être décomposé axialement en trois zones successives respectivement référencées A, B et C en éloignement de l'embout 4. La zone A correspond sensiblement à la partie du raidisseur 13 qui recouvre l'embout 4 et elle est délimitée radialement à l'extérieur par une surface 16 généralement cylindrique de révolution autour de l'axe longitudinal X de l'embout 4. Les zones B et C sont délimitées extérieurement par des surfaces 17 et 18 convergeant en éloignement de la zone A, sensiblement coniques, l'angle au sommet de la surface 17 étant supérieur à celui de la surface 18. La zone C correspond à la zone où le raidisseur présente une épaisseur relativement faible en comparaison avec l'épaisseur dans la zone A dans la partie de la zone B qui est adjacente à la zone A.

La zone A correspond à la zone d'encastrement du raidisseur 13 sur l'embout 4 et la zone intermédiaire B constitue la zone "active" du raidisseur, en ce sens qu'elle s'oppose à une flexion excessive de la conduite flexible 3.

Les canaux 15 précités s'étendent pour leur majeure partie dans la zone intermédiaire B, où la température à l'interface avec la conduite flexible 3 est susceptible d'être la plus élevée. A titre indicatif, l'épaisseur maximum du raidisseur dans la zone B peut être d'au moins 10 fois celle de la couche externe en polymère de la conduite flexible assurant la protection contre les agressions extérieures des couches internes de la conduite flexible.

Dans l'exemple de réalisation décrit, chaque canal 15 présente une portion principale 15a de section transversale demi-circulaire qui s'étend parallèlement à l'axe X en regard de la surface externe de la conduite flexible, et débouche à l'extérieur du corps élastique 14 du raidisseur 13 par deux portions d'extrémité inclinées sur l'axe X et respectivement référencées 15b et 15c. La portion 15b débouche à l'extérieur sensiblement au droit de l'extrémité de l'embout 4 adjacente à la conduite flexible 3. La portion 15c débouche à l'extérieur dans la zone C de faible épaisseur du raidisseur. A titre indicatif, le diamètre des canaux 15 peut être de l'ordre de 50 mm.

Dans l'exemple décrit, le corps du raidisseur est parcouru par huit canaux 15 équirépartis angulairement autour de l'axe longitudinal X comme représenté sur la figure 3.

La température à l'interface avec la conduite flexible peut être maintenue inférieure à 50° C, grâce à l'invention, ce qui réduit notablement la vitesse d'hydrolyse du polyuréthane et retarde la dégradation des performances mécaniques du raidisseur.

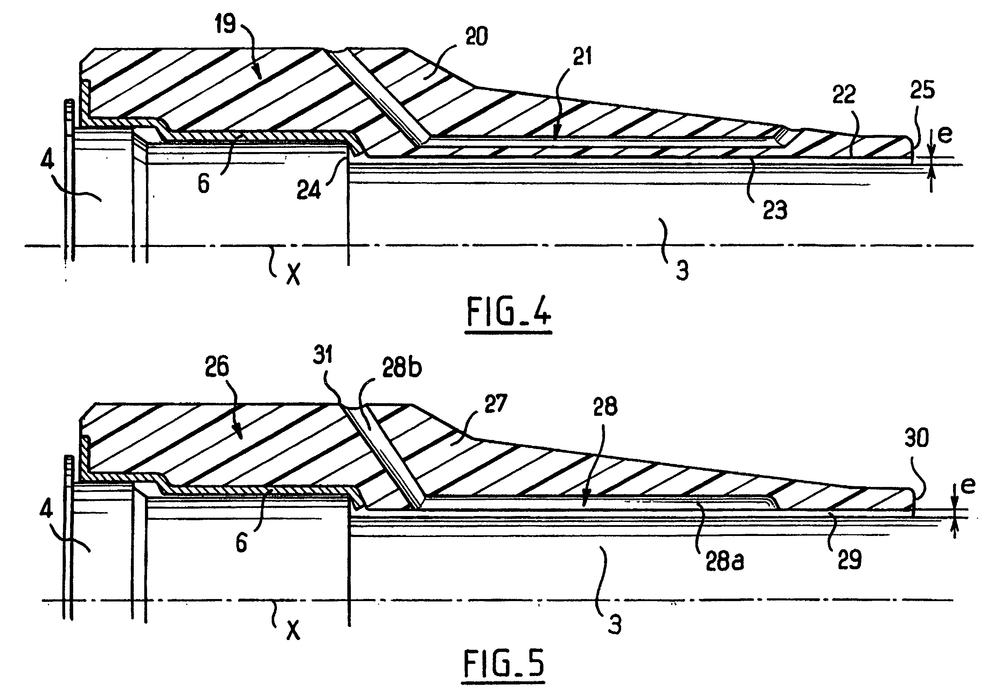

On a représenté sur la figure 4 un raidisseur 19 conforme à une variante de réalisation de l'invention. Le raidisseur 19 ne comporte pas d'armature 8, 10 pour illustrer le fait que l'invention s'applique également à des raidisseurs sans armature. Le corps élastique du raidisseur, référencé 20, est parcouru par une pluralité de canaux de refroidissement 21 répartis angulairement autour de l'axe longitudinal X. Toutefois, à la différence du raidisseur précédemment décrit, les canaux 21 ne débouchent pas sur une partie de leur longueur sur la surface interne 22 du raidisseur 19 en regard de la conduite flexible 3 mais s'étendent à distance de cette surface interne 22.

Un jeu annulaire 23 d'épaisseur e est présent à l'interface entre le corps élastique 20 du raidisseur 19 et la conduite flexible 3. Ce jeu annulaire 23 s'étend axialement depuis l'extrémité 24 de l'embout 4 adjacente à la conduite flexible 3 jusqu'à l'extrémité 25 de faible épaisseur du raidisseur 19, et permet la mise en place du raidisseur 19 par coulissement le long de la conduite flexible 3.

Les canaux 21 présentent dans un plan de coupe axial une forme généralement similaire à celles des canaux 15 décrits précédemment. On remarquera que les canaux 21 parcourent le corps élastique du raidisseur à proximité de la surface radialement interne 22 de manière à refroidir la partie la plus radialement interne du corps élastique du raidisseur. De préférence, comme représenté, la distance séparant la surface 22 et les canalisations 21 est inférieure ou égale au diamètre de ces dernières.

On a représenté sur la figure 5, en coupe axiale, un raidisseur 26 conforme à une variante de réalisation de l'invention. Ce raidisseur 26 comporte un corps élastique 27 parcouru par une pluralité de canaux de refroidissement 28 répartis angulairement autour de l'axe longitudinal X. Un jeu annulaire 29 d'épaisseur e est présent à l'interface entre le raidisseur 26 et la conduite flexible 3 sur sa portion s'étendant axialement depuis l'embout 4 jusqu'à l'extrémité de moindre épaisseur 30 du raidisseur 26. Chaque canal 28 présente une portion principale 28a s'étendant parallèlement à l'axe longitudinal X et constituée par une gorge s'ouvrant vers le jeu annulaire 29. Chaque portion principale 28a communique à son extrémité adjacente à l'embout 4 avec une portion d'extrémité 28b débouchant en 31 sur la surface externe du raidisseur 26, sensiblement au droit de l'extrémité de l'embout 4 adjacente à la conduite flexible 3. La partie d'extrémité du raidisseur qui présente l'épaisseur la plus faible n'est pas parcourue par les portions principales 28a.

Dans cet exemple de réalisation, la circulation d'eau de refroidissement s'effectue à travers le jeu annulaire 29 présent entre la zone d'extrémité de moindre épaisseur du raidisseur et la conduite flexible 3, à travers les portions principales 28a des canaux 28, et à travers les portions d'extrémité 28b s'étendant en oblique par rapport à l'axe longitudinal X.

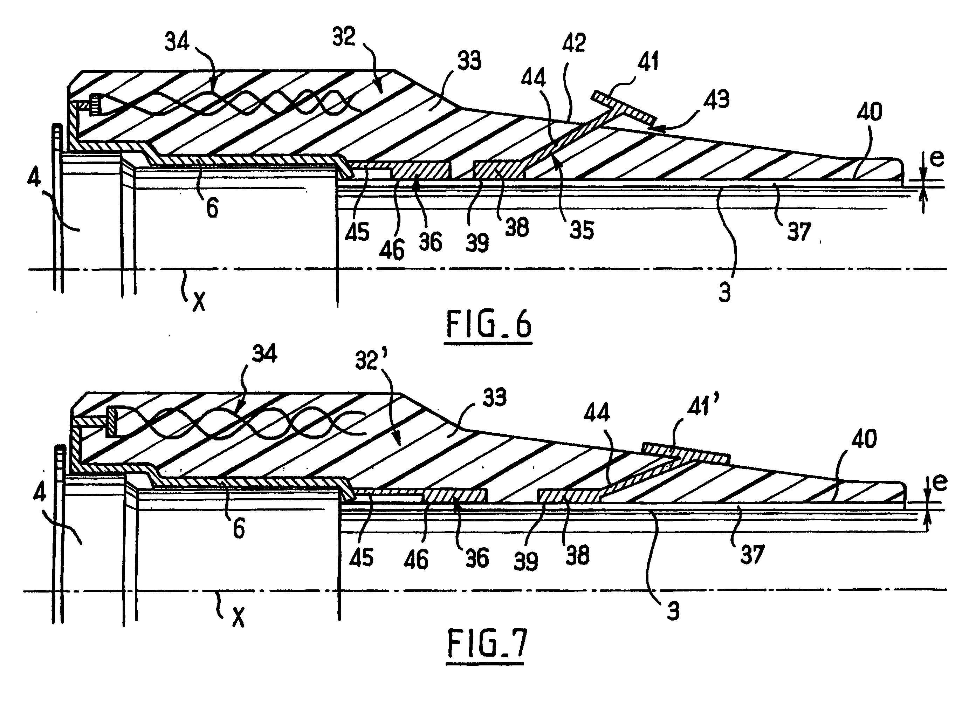

On a représenté sur la figure 6 un raidisseur 32 comprenant un corps élastique 33 muni d'une armature 34 constituée de fils tressés.

Des inserts métalliques 35 et 36 sont intégrés au corps élastique 33 pour constituer des échangeurs thermiques permettant un transfert de chaleur depuis l'interface avec la conduite flexible 3 vers l'extérieur.

L'insert métallique 35 comporte à une extrémité une partie radialement interne 38 présentant une face 39 formant une partie de la surface interne 40 du corps élastique 33 du raidisseur 32 et à l'autre extrémité une partie radialement externe constituant une ailette de refroidissement 41, destinée à dissiper la chaleur par convection et rayonnement avec le milieu extérieur. Plus précisément, cette ailette 41 s'étend à distance de la surface externe 42 du corps élastique 33 du raidisseur 32 de manière à ménager un intervalle 43 avec celle-ci et dissiper la chaleur sur ses deux faces principales. La partie interne 38 est reliée à l'ailette 41 par une partie intermédiaire constituant un pont de conduction thermique 44.

L'insert métallique 36 comporte un pont de conduction thermique 45 relié à une extrémité à l'insert 6 ajusté sur l'embout 4 pour transférer la chaleur à cet insert 6. Ce dernier participe ainsi au refroidissement de la surface interne du corps élastique 33 du raidisseur 32. L'insert 36 comporte à l'autre extrémité du pont de conduction thermique 45 une partie radialement interne présentant une face 46 qui constitue une partie de la surface interne 40 du corps élastique 33 du raidisseur 32 et qui sert d'élément radiant pour capter la chaleur à l'interface avec la conduite flexible 3.

On a représenté sur la figure 7 un raidisseur 32' constituant une variante de réalisation du raidisseur 32 représenté sur la figure 6. Cette variante de réalisation diffère de la précédente par le fait que l'ailette, référencée 41', est plaquée contre la surface externe du raidisseur. On comprendra que dans cette réalisation les échanges de chaleur avec l'extérieur sont moindres dans la mesure où ils s'effectuent seulement par une face principale de l'ailette 41'.

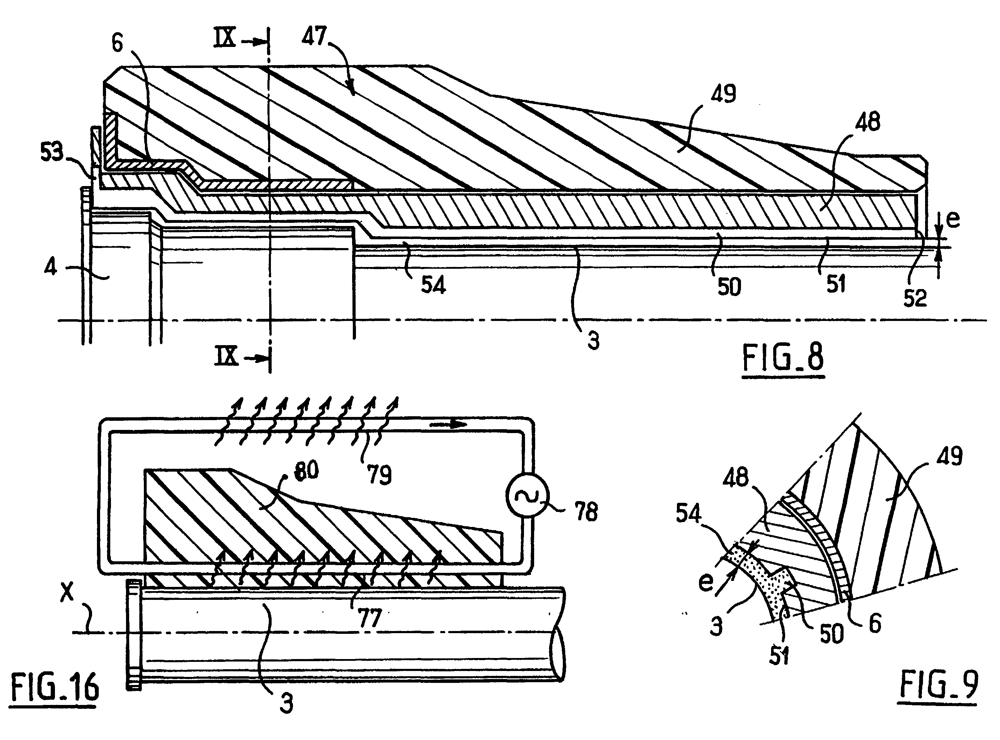

On a représenté sur la figure 8 un raidisseur 47 comportant une pièce intermédiaire 48 disposée entre le corps élastique 49 du raidisseur et la conduite flexible 3.

Dans cette réalisation, des canaux 50 sont réalisés sur la surface radialement interne 51 de la pièce intermédiaire 48 pour permettre une circulation de fluide entre les deux extrémités axiales 52, 53 du raidisseur. Les canaux 50 sont équipartis angulairement autour de l'axe longitudinal X et s'étendent longitudinalement sur toute la longueur de la pièce intermédiaire 48.

Le corps élastique 49 du raidisseur 47 est dans l'exemple décrit enfilé en force sur la pièce intermédiaire 48 mais en variante il peut être retenu sur cette dernière par tout moyen approprié connu de l'homme du métier, par exemple au moyen de vis venant en prise avec l'insert 6 et la pièce intermédiaire 48.

La pièce intermédiaire 48 est réalisée dans un matériau résistant à l'hydrolyse et présentant la flexibilité nécessaire pour suivre la flexion du corps élastique 49 du raidisseur tout en résistant de préférence à l'écrasement entre la conduite flexible 3 et le corps élastique 49 du raidisseur.

La pièce intermédiaire 48 peut ainsi être réalisée en un polymère tel que le polyéthylène haute densité ou l'EPDM par exemple.

Comme on pourra le remarquer à l'examen des figures 8 et 9, un jeu annulaire 54 d'épaisseur e est ménagé entre la conduite flexible 3 et la pièce intermédiaire 48. Ce jeu permet le montage de la pièce intermédiaire 48 sur la conduite flexible 3.

Dans le cas où l'on utilise une pièce intermédiaire 48, le corps élastique 49 du raidisseur 47 peut conserver alors son intégrité, ce qui est favorable sur le plan mécanique compte-tenu du fait que les canaux décrits dans les réalisations précédentes constituent des zones singulières où des contraintes mécaniques peuvent se concentrer et provoquer des fissures endommageant le corps élastique du raidisseur. L'utilisation d'une pièce intermédiaire simplifie également l'opération de moulage du corps élastique, qui s'effectue sans les noyaux utilisés pour la réalisation des canaux décrits dans les réalisations de figures 2, 4 et 5.

Dans les exemples de réalisation précédemment décrits, l'épaisseur e du jeu annulaire est choisie de manière à permettre le montage par coulissement du raidisseur, et sa valeur est de préférence comprise entre 2 et 16 mm, déterminée par exemple en prenant 1 mm de jeu par pouce de diamètre externe de conduite flexible.

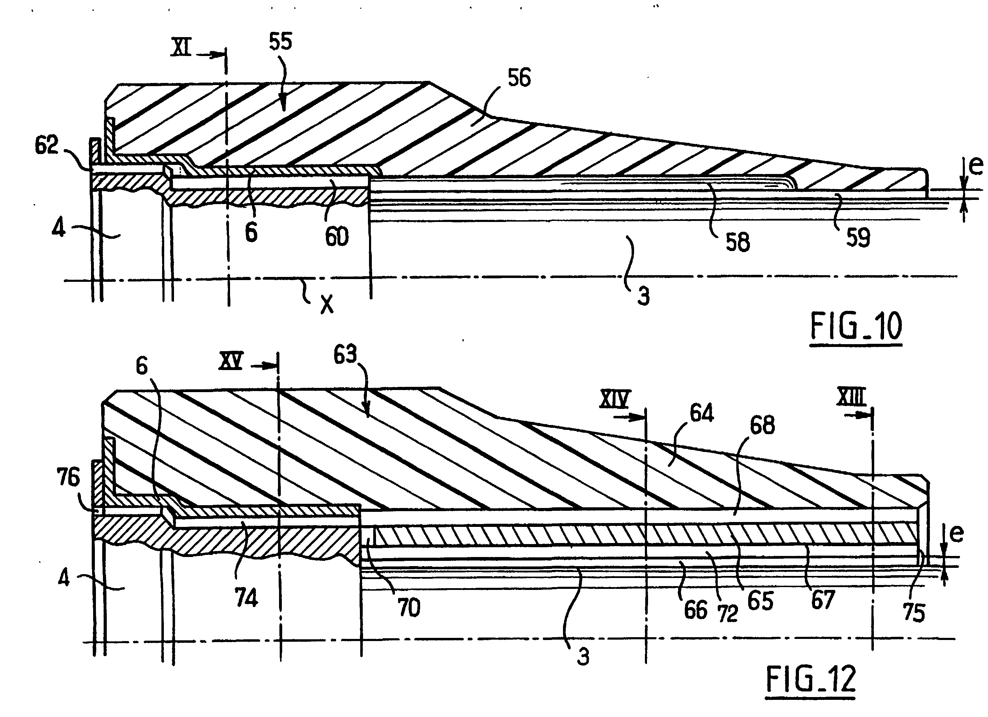

On a représenté sur la figure 10 un raidisseur 55 conforme à un autre exemple de réalisation de l'invention. Ce raidisseur 55 comporte un corps élastique 56 en polyuréthane surmoulé sur un insert métallique 6. Des canaux de circulation d'eau 58 sont réalisés sur la face interne du corps élastique 56 et se présentent sous la forme de gorges longitudinales s'ouvrant en direction de la conduite flexible et s'étendant axialement entre l'embout 4 et la zone de faible épaisseur du raidisseur. L'embout 4 présente sur sa périphérie des gorges longitudinales 60 qui permettent un passage d'eau entre l'embout 4 et l'insert 6.

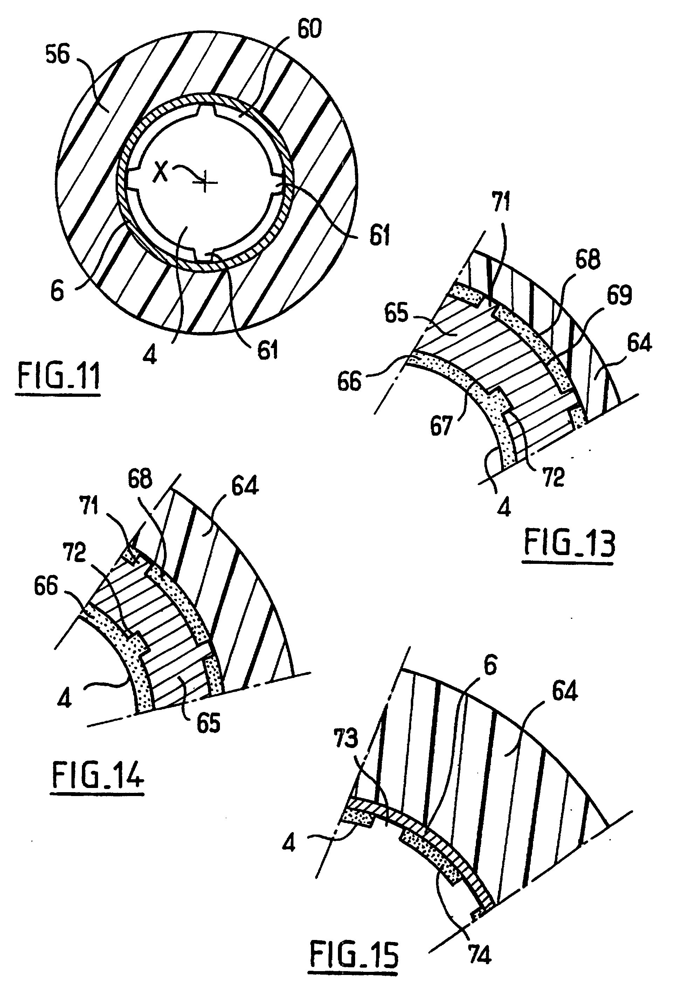

Dans l'exemple décrit, la circulation d'eau s'effectue au travers de l'espace annulaire 59 ménagé entre la zone de moindre épaisseur du corps élastique 56 et la conduite flexible 3, le long des canaux 58, et le long des gorges 60 pour déboucher par des ajours 62 à l'extrémité axiale du raidisseur 55 adjacente à l'embout 4. Comme on pourra le remarquer à l'examen de la figure 11, la surface interne de l'insert 6 s'appuie sur des nervures 61 formées sur la périphérie de l'embout 4 et ménageant entre elles les gorges 60.

On a représenté sur la figure 12 un raidisseur 63 conforme à un autre exemple de réalisation de l'invention. Ce raidisseur 63 comporte un corps élastique 64 en polyuréthane surmoulé sur un insert métallique 6. Le corps élastique 64 est enfilé à force sur une pièce intermédiaire 65 s'étendant axialement depuis l'extrémité de moindre épaisseur du corps élastique 64 jusqu'à l'embout 4. Cette pièce intermédiaire 65 est réalisée dans un matériau choisi pour ses propriétés mécaniques et sa résistance à l'hydrolyse, à l'instar de la pièce intermédiaire 48 de l'exemple de réalisation décrit en référence à la figure 6. Des canaux longitudinaux 72 et 68 sont réalisés respectivement sur les faces radialement interne et radialement externe de la pièce intermédiaire 65 comme représenté sur les figures 13 et 14. Plus précisément, les canaux 72 sont constitués par des cannelures réalisées sur la surface radialement interne 67 de la pièce intermédiaire 65 et les canaux 68 sont réalisés entre des nervures 71 formant saillie sur la surface radialement externe 69 de la pièce intermédiaire 65. Des passages traversants 70 sont réalisés à l'extrémité axiale de la pièce intermédiaire 65 adjacente à l'embout 4. Ces passages traversants 70 établissent une communication de fluide entre les canaux 72 et les canaux 68.

Dans l'exemple décrit en référence à la figure 12, la circulation d'eau s'effectue depuis une extrémité axiale 75 jusqu'à l'extrémité axiale opposée du raidisseur par les canaux 68, par les canaux 72 et les passages traversants 70, et au travers de passages de fluide 74 ménagés sur la périphérie de l'embout 4 entre ce dernier et la surface radialement interne de l'insert 6. La circulation d'eau s'effectue ainsi sur les deux faces principales de la pièce intermédiaire 65. Les passages de fluide 74 sont formés entre des nervures 73 sur lesquelles repose la surface radialement interne de l'insert 6, comme représenté sur la figure 15.

Un jeu annulaire 66 est présent entre la surface radialement interne 67 de la pièce intermédiaire 65 et la conduite flexible 3 pour le montage par coulissement de la pièce intermédiaire 65.

Bien entendu, l'invention n'est pas limitée aux exemples de réalisation qui viennent d'être décrits.

On peut, sans sortir du cadre de la présente invention, limiter l'échauffement à l'interface entre le raidisseur et la conduite flexible au moyen d'une circulation forcée d'un fluide de refroidissement, tel qu'illustré très schématiquement sur la figure 16. Sur cette figure, le corps élastique 80 du raidisseur est traversé par une conduite 77 parcourue par un fluide caloporteur mis en circulation par une pompe 78. La conduite 77 est reliée thermiquement à un élément radiant non représenté dans un soucis de clarté du dessin, qui capte la chaleur au sein du corps élastique du raidisseur au voisinage de la surface interne du corps élastique 80. Le fluide caloporteur est transporté jusqu'à un autre élément radiant 79 pour être refroidi par échange de chaleur avec le milieu extérieur.

Un tel dispositif permet de s'affranchir des variations de température du milieu extérieur, qui affectent l'efficacité du refroidissement de l'interface entre le raidisseur et la conduite flexible.

Un tel dispositif permet en outre un refroidissement efficace lorsque le raidisseur est susceptible d'être immergé seulement en partie, ou encore non immergé mais soumis à une atmosphère humide.

L'invention s'applique également à des raidisseurs présentant un corps élastique réalisé dans une matière élastomère autre que le polyuréthane mais sensible à l'hydrolyse.

La matière choisie pour réaliser le corps élastique du raidisseur comporte avantageusement un composé adapté à empêcher l'accrochage de la matière vivante, tel qu'un composé chloré par exemple.

On peut également, dans une variante de réalisation de l'invention non représentée, ménager entre la conduite flexible et le corps élastique du raidisseur un jeu suffisant pour permettre le refroidissement souhaité, en interposant entre la conduite flexible et le corps élastique du raidisseur des entretoises flexibles. Des canaux de circulation d'eau sont alors formés le long de ces entretoises par écartement local de parties en regard de la conduite flexible et du corps élastique du raidisseur. On assure un écoulement d'eau en faisant déboucher l'extrémité axiale de ces canaux adjacente à l'embout par tout moyen approprié, par exemple au moyen de canaux inclinés sur l'axe longitudinal X tels que les canaux 28b décrits en référence à la figure 5 ou au moyen de canaux formés entre l'insert 6 et l'embout 4, tels que les canaux 60 de la figure 10. Bien entendu, on ne sort pas du cadre de l'invention en supprimant l'insert 6.

L'invention permet avantageusement de dissiper la chaleur à l'interface entre le raidisseur et la conduite flexible de manière entièrement passive, la circulation de l'eau étant provoquée par le phénomène de thermo-siphon. Toutefois, on peut sans sortir du cadre de l'invention forcer la circulation de l'eau à l'aide de moyens mécaniques externes au raidisseur.

## Revendications

1. Raidisseur destiné à équiper une canalisation présentant une conduite flexible à usage en milieu marin, et transportant un fluide chaud, ledit raidisseur comportant un corps élastique disposé au moins partiellement en regard de ladite conduite flexible, **caractérisé par le fait qu'**il comporte des moyens (15; 21; 28; 35; 50; 58; 68; 72; 77) sur la conduite flexible pour dissiper la chaleur à l'interface entre le raidisseur et ladite conduite flexible (3).

2. Raidisseur selon la revendication 1, **caractérisé par le fait que** lesdits moyens pour dissiper la chaleur comportent au moins un canal de circulation d'eau (15; 21; 28) au sein du corps élastique (14; 20; 27) du raidisseur.

3. Raidisseur selon la revendication 2, **caractérisé par le fait que** ledit canal de circulation d'eau (15) débouche sur ladite conduite flexible (3).

4. Raidisseur selon l'une quelconque des revendications 1 à 3, **caractérisé par le fait qu'**un jeu annulaire (23; 29; 37; 54) d'épaisseur comprise entre 2 et 16 mm est ménagé à l'interface entre le raidisseur et ladite conduite flexible (3).

5. Raidisseur selon l'une quelconque des revendications 1 à 4, **caractérisé par le fait que** lesdits moyens pour dissiper la chaleur comportent au moins un insert métallique (35; 36) apte à conduire la chaleur depuis l'interface entre le raidisseur et la conduite flexible vers l'extérieur.

6. Raidisseur selon la revendication 5, **caractérisé par le fait que** ledit insert (35) comporte une ailette externe (41; 41') de dissipation thermique apte à dissiper la chaleur par convection et/ou par rayonnement.

7. Raidisseur selon l'une quelconque des revendications 1 à 6, **caractérisé par le fait que** lesdits moyens pour dissiper la chaleur comportent une pièce intermédiaire (48; 65) disposée entre le corps élastique (49) du raidisseur et ladite conduite flexible (3).

8. Raidisseur selon la revendication 7, **caractérisé par le fait que** ladite pièce intermédiaire (48; 65) comporte au moins un canal de circulation d'eau (50; 68; 72).

9. Raidisseur selon l'une quelconque des revendications 1 à 8, **caractérisé par le fait que** lesdits moyens pour dissiper la chaleur comportent des moyens (77; 78; 79) pour établir une circulation forcée d'un fluide de refroidissement au sein du raidisseur.

10. Raidisseur selon l'une quelconque des revendications 1 à 9, **caractérisé par le fait que** la température du fluide chaud circulant dans ladite conduite flexible est comprise entre 80 et 200°C.

11. Raidisseur selon l'une quelconque des revendications 1 à 10, **caractérisé par le fait que** la longueur du raidisseur est supérieure ou égale à 1,5 m.

12. Raidisseur selon l'une quelconque des revendications 1 à 11, **caractérisé par le fait que** ledit corps élastique (14; 20; 27; 33; 49; 56; 64) est réalisé en polyuréthane.

13. Raidisseur selon l'une quelconque des revendications 1 à 12, **caractérisé par le fait qu'**il comporte une pluralité de canaux de circulation d'eau (15) dont la distance à la surface interne du raidisseur en regard de la conduite flexible est inférieure ou égale au diamètre desdits canaux.

14. Raidisseur selon l'une quelconque des revendications 1 à 13, **caractérisé par le fait qu'**il comporte une pluralité de canaux de circulation d'eau dont l'espacement est inférieur ou égal à deux fois leur diamètre et de préférence égal à leur diamètre.

15. Canalisation (1) équipée d'un raidisseur (13; 19; 26; 32; 47) tel que défini dans l'une quelconque des revendications précédentes.

## Patentansprüche

1. Versteifungselement, das zur Ausstattung eines Rohrleitungssystems vorgesehen ist, das über eine flexible Leitung zur Anwendung in Meeresgebieten verfügt, und das eine heiße Flüssigkeit transportiert, wobei das besagte Versteifungselement einen elastischen Körper enthält, der zumindest teilweise im Hinblick auf die besagte flexible Leitung ausgerichtet ist,
**dadurch gekennzeichnet, dass**
es die Vorrichtungen (15; 21; 28; 35; 50; 58; 68; 72; 77) in der flexiblen Leitung enthält, um Wärme an der Schnittstelle zwischen dem Versteifungselement und der besagten flexiblen Leitung abzuleiten.

2. Versteifungselement gemäß Anspruch 1, **dadurch gekennzeichnet, dass** die besagten Vorrichtungen zur Wärmeableitung mindestens einen Wasserkreislaufkanal (15; 21; 28) im elastischen Körper (14; 20; 27) des Versteifungselements enthalten.

3. Versteifungselement gemäß Anspruch 2, **dadurch gekennzeichnet, dass** besagter Wasserkreislaufkanal (15) in die besagte flexible Leitung (3) mündet.

4. Versteifungselement gemäß einem der oben genannten Ansprüche 1 - 3, **dadurch gekennzeichnet, dass** ein ringförmiger Zwischenraum (23; 29; 37; 54) von einer Stärke zwischen 2 und 16 mm an der Schnittstelle zwischen dem Versteifungselement und der besagten flexiblen Leitung frei gelassen ist.

5. Versteifungselement gemäß einem der oben genannten Ansprüche 1 - 4, **dadurch gekennzeichnet, dass** die besagten Wärmeableitungsvorrichtungen mindestens ein Metallteil (35; 36) enthalten, das geeignet ist, die Wärme von der Schnittstelle zwischen dem Versteifungselement und der flexiblen Leitung nach außen abzuleiten.

6. Versteifungselement gemäß Anspruch 5, **dadurch gekennzeichnet, dass** besagtes Metallteil (35) eine äußere thermische Ableitungsfläche (41; 41') trägt, die geeignet ist, Wärme durch Konvektion und/oder Abstrahlung abzuleiten.

7. Versteifungselement gemäß einem der oben genannten Ansprüche 1 - 6 **dadurch gekennzeichnet, dass** besagte Vorrichtungen zur Wärmeableitung ein Zwischenstück (48; 65) enthalten, das zwischen dem elastischen Körper (49) des Versteifungselements und der besagten flexiblen Leitung (3) eingefügt ist.

8. Versteifungselement gemäß Anspruch 7, **dadurch gekennzeichnet, dass** besagtes Zwischenstück (48; 65) mindestens einen Wasserkreislaufkanal (50; 68; 72) enthält.

9. Versteifungselement gemäß einem der oben genannten Ansprüche 1 - 8 **dadurch gekennzeichnet, dass** besagte Wärmeableitungsvorrichtungen Vorrichtungen (77; 78; 79) enthalten, die dazu dienen, eine zwangsläufige Zirkulation einer Kühlflüssigkeit im Versteifungselement zu erreichen.

10. Versteifungselement gemäß einem der oben genannten Ansprüche 1 - 9 **dadurch gekennzeichnet, dass** die Temperatur der heißen Flüssigkeit, die in der besagten flexiblen Leitung zirkuliert, zwischen 80 und 200 °C beträgt.

11. Versteifungselement gemäß einem der oben genannten Ansprüche 1 - 10 **dadurch gekennzeichnet, dass** die Länge des Versteifungselements größer/gleich 1,50 m ist.

12. Versteifungselement gemäß einem der oben genannten Ansprüche 1 - 11 **dadurch gekennzeichnet, dass** besagter elastischer Körper (14; 20; 27; 33; 49; 56; 64) aus Polyurethan hergestellt wird.

13. Versteifungselement gemäß einem der oben genannten Ansprüche 1 - 12 **dadurch gekennzeichnet, dass** es eine Vielzahl von Wasserkreislaufkanälen (15) enthält, deren Entfernung an der inneren Oberfläche des Versteifungselements von der flexiblen Leitung kleiner/gleich dem Durchmesser der besagten Kanäle ist.

14. Versteifungselement gemäß einem der oben genannten Ansprüche 1 - 13 **dadurch gekennzeichnet, dass** es eine Vielzahl von Wasserkreislaufkanälen enthält, deren Abstand kleiner/gleich ihrem doppelten Durchmesser und vorzugsweise gleich ihrem Durchmesser ist.

15. Ein Rohrleitungssystem (1), das mit einem Versteifungselement (13; 19; 26; 32; 47) gemäß jedem beliebigen der vorliegenden Ansprüche ausgerüstet ist.

## Claims

1. Stiffener designed for fitting to a pipe comprising a flexible conduit for use in a marine environment and carrying a hot fluid, the said stiffener comprising a flexible body located at least partially over the said flexible conduit, **characterized by** the fact that it comprises means (15; 21; 28; 35; 50; 58; 68; 72; 77) on the flexible conduit for dissipating the heat at the interface between the stiffener and the said flexible conduit (3).

2. Stiffener as described in claim 1, **characterized by** the fact that the said means of dissipating the heat incorporate at least one water circulation channel (15; 21; 28) inside the flexible body (14; 20; 27) of the stiffener.

3. Stiffener as described in claim 2, **characterized by** the fact that the said water circulation channel (15) opens out onto the said flexible conduit (3).

4. Stiffener as described in any one of claims 1 to 3, **characterized by** the fact that an annular gap (23; 29; 37; 54), sized between 2 and 16 mm, is provided at the interface between the stiffener and the said flexible conduit (3).

5. Stiffener as described in any one of claims 1 to 4, **characterized by** the fact that the said means of dissipating the heat comprise at least one metal insert (35; 36) capable of conducting the heat from the interface between the stiffener and the flexible conduit to the exterior.

6. Stiffener as described in claim 5, **characterized by** the fact that the said insert (35) incorporates an external heat sink fin (41; 41') capable of dissipating the heat by convection and/or radiation.

7. Stiffener as described in any one of claims 1 to 6, **characterized by** the fact that the said means of dissipating the heat incorporate an intermediate fitting (48; 65) located between the flexible body (49) of the stiffener and the said flexible conduit (3).

8. Stiffener as described in claim 7, **characterized by** the fact that the said intermediate fitting (48; 65) incorporates at least one water circulation channel (50; 68; 72).

9. Stiffener as described in any one of claims 1 to 8, **characterized by** the fact that the said means of dissipating the heat incorporate the means (77; 78; 79) for establishing forced circulation of a cooling fluid inside the stiffener.

10. Stiffener as described in any one of claims 1 to 9, **characterized by** the fact that the temperature of the hot fluid circulating in the said flexible conduit is between 80° and 200° C.

11. Stiffener as described in any one of claims 1 to 10, **characterized by** the fact that the length of the stiffener is greater than or equal to 1.5 m.

12. Stiffener as described in any one of claims 1 to 11, **characterized by** the fact that the said flexible body (14; 20; 27; 33; 49; 56; 64) is manufactured from polyurethane.

13. Stiffener as described in any one of claims 1 to 12, **characterized by** the fact that it incorporates a number of water circulation channels (15) whose distance from the stiffener internal surface over the flexible conduit is less than or equal to the diameter of the said channels.

14. Stiffener as described in any one of claims 1 to 13, **characterized by** the fact that it incorporates a number of water circulation channels whose spacing is less than or equal to twice their diameter and preferably equal to their diameter.

15. Pipe (1) fitted with a stiffener (13; 19; 26; 32; 47) as defined in any one of the above claims.
